# EUROPÄISCHE PATENTSCHRIFT

(11) **EP 3 855 042 B1**
(45) Veröffentlichungstag und Bekanntmachung des Hinweises auf die Patenterteilung: **11.10.2023**
(21) Anmeldenummer: 20020040.0
(22) Anmeldetag: 27.01.2020
(51) Int. Cl.: F16F 1/362, F16F 1/38, F16F 1/393

(54) **ELASTISCHES METALLLAGER**
ELASTIC METAL BEARING
PALIER MÉTALLIQUE ÉLASTIQUE

(43) Veröffentlichungstag der Anmeldung: 28.07.2021
(73) Patentinhaber: Hutchinson Stop-Choc GmbH & Co.KG, 71272 Renningen (DE)
(72) Erfinder: Chadderton, Thimothy, 76275 Ettlingen (DE); Chrestels, Jörg, 71636 Ludwigsburg (DE); Hahn, Andreas, 71063 Sindelfingen (DE); Spillner, Axel, 71672 Marlbach am Neckar (DE)
(74) Vertreter: Schmid, Rudolf

(56) Entgegenhaltungen:
- EP-A1- 1 032 774
- EP-B1- 1 032 774
- DE-A1- 3 830 808
- DE-C1- 4 428 870
- LU-A1- 37 026

## Beschreibung

Die Erfindung betrifft ein elastisches Metalllager, insbesondere Fahrwerkslager in Eisenbahnen, mit den Merkmalen des Oberbegriffs des Anspruchs 1.

Elastische Fahrwerkslager in Eisenbahnen übertragen Kräfte und Momente zwischen Fahrwerk und Wagenkasten bei gleichzeitiger Torsion und kardanischer Beweglichkeit. Beispiele hierfür sind elastische Längsmitnahme zwischen Fahrwerk und Wagenkasten, Drehmoment- oder Wankstützen. Elastische Fahrwerkslager sollen beim Übertragen von Kräften und Momenten Schocks und Schwingungen reduzieren.

Dokument DE 10 2017 211 733 A1 offenbart ein Fahrwerkslager eines Fahrzeuges mit einem annähernd zylindrisch geformten inneren Kern zur Verbindung mit einem ersten Bauteil. Die Mantelfläche des zumindest annähernd zylindrisch geformten inneren Kerns ist von einer äußeren, ebenfalls zylindrisch geformten Hülse umgeben und zwischen dem inneren Kern und der äußeren Hülse ist mindestens ein Metallkissen-Element angeordnet. Der innere Kern und das Metallkissen-Element sind dabei gemeinsam als Gleitlageranordnung zur Aufnahme von Kräften in Längsachse des Metalllagers ausgebildet. Kardanische Beweglichkeit lässt dieses Fahrwerkslager nicht oder allenfalls nur äußerst eingeschränkt zu.

Dokument WO 2018/193141 A1 offenbart ein elastisches Gelenk mit einem Innenring zur Befestigung auf einer Welle und einer Außenfläche mit zwei komplementären Zwischenabschnitten mit reduzierten Querschnitten an gegenüberliegenden Enden des Innenrings und Stützzonen für Metalldrahtlager. Ein Außenring weist eine äußere zylindrische Oberfläche zum Anbringen des Rings an einem Träger auf und eine innere Oberfläche mit zwei Zwischenabschnitten mit abnehmendem Querschnitt zu gegenüberliegenden Enden des Rings hin. Metalldrahtlager sind zwischen Innenring und Außenring angeordnet. Das elastische Gelenk ist konstruktiv aufwändig und ergibt hohe Belastungen für die Metallkissen mit entsprechendem Verschleiß. Das Dokument LU 37 026 A1 offenbart auch ein elastisches Lager, das als nächstliegender Stand der Technik betrachtet wird.

Eine Aufgabe der Erfindung ist es, ein verbessertes elastisches Metalllager zum Übertragen von Kräften bei gleichzeitiger Torsion und kardanischer Beweglichkeit zu schaffen.

Die Lösung erfolgt mit einem elastischen Metalllager mit den Merkmalen des Anspruchs 1.

Gemäß der Erfindung ist ein elastisches Metalllager, insbesondere Fahrwerkslager in Eisenbahnen, zur Kraftübertragung bei gleichzeitiger Torsion und kardanischer Beweglichkeit vorgesehen mit einem Kern zur Verbindung mit einem ersten Bauteil, wobei der Kern einen rotationssymmetrischen Teilabschnitt entlang einer zentralen Längsachse des Metalllagers mit einer entlang der zentralen Längsachse konstant gekrümmten Oberfläche aufweist. Eine im Wesentlichen zylindrische Außenhülse zur Verbindung mit einem zweiten Bauteil ist rotationssymmetrisch zur zentralen Längsachse um den Teilabschnitt angeordnet und mindestens zwei Federelemente aus Ganzmetallkissen liegen zwischen dem Teilabschnitt des Kerns und der Außenhülse am Kern an. Die Federelemente aus Ganzmetallkissen liegen auf der gesamten Oberfläche des Teilabschnitts an für gleichmäßig verteilte Lastaufnahme. Sicherungsringe zur axialen Fixierung der Außenhülse und der Elemente zwischen Kern und Außenhülse sind zu jeder Seite des Teilabschnitts radial umlaufend in der Außenhülse gehalten. Erfindungsgemäß kann die Außenhülse mit den Ganzmetallkissen gleiten relativ zur konstant gekrümmten Oberfläche am Teilabschnitt des Kerns, so dass die Außenhülse sich um eine zur zentralen Längsachse senkrechte Querachse des Metalllagers neigen kann zusätzlich zu der durch die Nachgiebigkeit der mindestens zwei Federelemente aus Ganzmetallkissen sich ergebenden Neigung für verbesserte kardanische Beweglichkeit zwischen erstem und zweitem Bauteil, wobei die Tragfähigkeit des erfindungsgemäßen elastischen Metalllagers durch Neigung nicht beeinträchtigt wird. Neigung der Außenhülse zur zentralen Längsachse durch Gleiten relativ zur konstant gekrümmten Oberfläche wird vom erfindungsgemäßen elastischen Metalllager nicht behindert, so dass sich verbesserte kardanische Beweglichkeit bei konstruktiv einfacher Geometrie des Kerns für das erfindungsgemäße elastische Metalllager ergibt bei gleichmäßig verteilter Lastaufnahme über die gekrümmte Oberfläche des Teilabschnitts. Das erfindungsgemäße elastische Metalllager mit rotationssymmetrischem Teilabschnitt entlang der zentralen Längsachse mit konstant gekrümmter Oberfläche erlaubt ohne Einschränkungen Torsion um die zentrale Längsachse und bietet Vorteile bei Fertigung und Montage. Die für Schwingungsdämpfung relevanten Eigenschaften der Federelemente aus Ganzmetallkissen, die zu einem großen Teil aus Reibung innerhalb der Ganzmetallkissen des erfindungsgemäßen elastischen Metalllagers resultieren, variieren bei Temperaturen zwischen - 60° C und 250° C nur minimal und sind beständig gegen aggressive chemische Substanzen für zusätzlich erhöhte Lebensdauer des erfindungsgemäßen elastischen Metalllagers. Das erfindungsgemäße elastische Metalllager enthält ausschließlich metallische Komponenten.

Gemäß einer bevorzugten Ausgestaltung der Erfindung ist der Teilabschnitt des Kerns zur Außenhülse gekrümmt, d. h. konvex und die Mitte des Teilabschnitts ist der Außenhülse am nächsten für symmetrisch kardanisches Verhalten zur Querachse des Metalllagers.

Gemäß einer weiteren bevorzugten Ausgestaltung der Erfindung sind mindestens zwei Keile rotationssymmetrisch zur zentralen Längsachse und symmetrisch zur Querachse des Metalllagers vorgesehen zwischen den Ganzmetallkissen und der Außenhülse für symmetrische Krafteinleitung und selbstzentrierende Montage.

Gemäß einer weiteren bevorzugten Ausgestaltung der Erfindung liegt die breitere Seite von jedem Keil an einem der Sicherungsringe an für vereinfachte, sichere Montage und Vorspannung auf die Ganzmetallkissen.

Gemäß einer weiteren bevorzugten Ausgestaltung der Erfindung sind die Ganzmetallkissen jeweils aus Drahtgestricken gebildet mit ausreichender Festigkeit für stabile Befestigung und mit hoher Dämpfungswirkung.

Gemäß einer weiteren bevorzugten Ausgestaltung der Erfindung bestehen die Federelemente aus Edelstahl für erhöhte Beständigkeit.

Gemäß einer weiteren bevorzugten Ausgestaltung der Erfindung sind bis zu 12 Federelemente rotationssymmetrisch zur zentralen Längsachse und symmetrisch zur Querachse des Metalllagers angeordnet zwischen Kern und Außenhülse vorgesehen.

Gemäß einer weiteren bevorzugten Ausgestaltung der Erfindung sind die Federelemente vorgespannt montiert.

Gemäß einer weiteren bevorzugten Ausgestaltung der Erfindung sind die Oberfläche des Teilabschnitts und/oder Innenfläche der Außenhülse keramik- oder mit Email beschichtet für elektrische Isolation zwischen erstem und zweitem Bauteil.

Gemäß einer weiteren bevorzugten Ausgestaltung der Erfindung ist die Breite B der Außenhülse circa B = 0,5 x D bis 1,0 x D.

Gemäß einer bevorzugten Ausgestaltung der Erfindung ist eine Anwendung des erfindungsgemäßen elastischen Metalllagers bei Eisenbahnen, insbesondere innerhalb des Fahrwerks für Längsmitnahme zwischen Fahrwerk und Wagenkasten, Drehmoment- oder Wankstützen vorgesehen.

Das erfindungsgemäße elastische Metalllager wird im Folgenden anhand eines bevorzugten Beispiels mit Bezug auf die beigefügten Figuren beschrieben. Es zeigen:
Fig. 1 eine Gesamtansicht eines elastischen Metalllagers gemäß der Erfindung,
Fig. 2 einen Querschnitt entlang einer Längsachse durch das elastische Metalllager gemäß Figur 1,
Fig. 3 eine Draufsicht entlang der Längsachse des um 90° um die Längsachse gedrehten elastischen Metalllagers gemäß Figur 2, und
Fig. 4 eine Draufsicht auf die Längsachse durch einen Kern des um 90° um die Längsachse gedrehten elastischen Metalllagers gemäß Figur 2 im vergrößerten Maßstab 2 : 1.

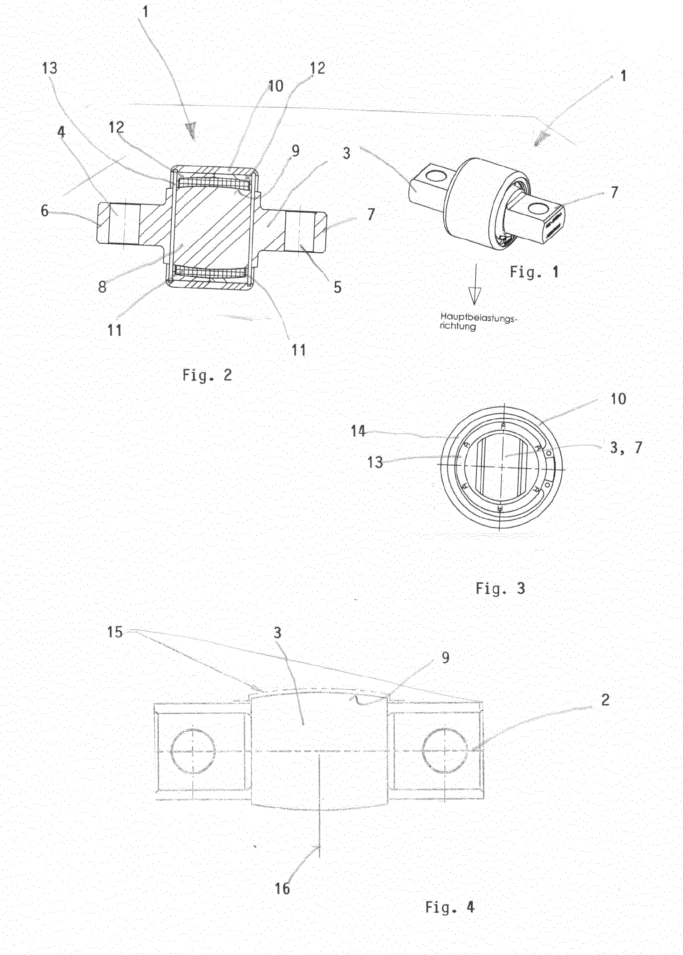

Fig. 1 - 4: Ein elastisches Metalllager 1 ist vorgesehen zur Montage zwischen Fahrwerk als einem ersten Bauteil (nicht dargestellt) und Wagenkasten einer Eisenbahn als einem zweiten Bauteil (nicht dargestellt) als Drehmoment- oder Wankstütze. Das elastische Metalllager 1 weist eine zentrale Längsachse 2 (s. Fig. 4) auf und ist ausgelegt zur Aufnahme von Kräften und Momenten quer zu Längsachse 2. Das elastische Metalllager 1 ist zudem ausgelegt für Torsion um Längsachse 2 und für kardanische Bewegungen quer zu Längsachse 2.

Das elastische Metalllager 1 enthält einen zu seiner zentralen Längsachse 2 rotationssymmetrische Kern 3 mit jeweils einer durchgehenden Bohrung 4, 5 in gegenüberliegenden, abgeflachten Enden 6, 7. Die durchgehenden Bohrungen 4, 5 sind zur Aufnahme von Bolzen (nicht dargestellt) vorgesehen zur Verbindung des elastischen Metalllagers 1 mit dem ersten Bauteil. Die Hauptbelastungsrichtung für das elastische Metalllager 1 verläuft in Richtung der Achsen der Bohrungen 4, 5.

Mittig zwischen den durchgehenden Bohrungen 4, 5 weist der Kern 3 einen zur zentralen Längsachse 2 rotationssymmetrischen Teilabschnitt 8 mit einer zur zentralen Längsachse konstant gekrümmten Oberfläche 9 auf. Der Teilabschnitt 8 weist insgesamt einen zu den abgeflachten Enden 6, 7 überstehenden Durchmesser auf. Die Krümmung der Oberfläche 9 ist konvex.

Eine im Wesentlichen zylindrische Außenhülse 10 zur Verbindung mit dem zweiten Bauteil ist rotationssymmetrisch zur zentralen Längsachse 2 um den Teilabschnitt 8 angeordnet. Zwölf Federelemente 11 jeweils aus Ganzmetallkissen aus Drahtgestricken aus Edelstahl liegen zwischen dem Teilabschnitt 8 des Kerns 3 und der Außenhülse 10 an der gekrümmten Oberfläche 9 von Teilabschnitt 8 an. Die Federelemente 11 sind baugleich. Jeweils 6 Federelemente 11 auf jeder Seite eines Meridians 16 (s. Fig. 4) des Teilabschnitts 8 sind koaxial zur zentralen Längsachse 2, stirnseitig am Meridian 16 des Teilabschnitts 8 gegenüberliegend angeordnet.

Zwischen den Federelementen 11 und der Außenhülse 10 sind Keile 12 vorgesehen. Jeweils ein Keil 12 auf jeder Seite des Meridians 16 des Teilabschnitts 8 ist koaxial zur zentralen Längsachse 2, sich mit der schmaleren Seite am Meridian 16 des Teilabschnitts 8 gegenüberliegend angeordnet. Die Federelemente 11 sind jeweils von den radial äußeren, ringförmigen Keilen 12 rotationssymmetrisch so eingefasst, dass die Federelemente 11 nach Montage vorkomprimiert sind. Die Keile 12 liegen in axialer Richtung innen an der Außenhülse 2 an und erstrecken sich im Wesentlichen parallel zur zentralen Längsachse 2.

Sicherungsringe 13 zur axialen Fixierung der Außenhülse 10 und der Elemente 11, 12 zwischen Teilabschnitt 8 und Außenhülse 10 sind zu jeder Seite des Teilabschnitts 8 radial umlaufend in Nuten 14 der Außenhülse 10 gehalten. Elemente 11, 12 sind ohne axiales Spiel von den Sicherungsringen 13 zu jeder Seite des Teilabschnitts 8 gehalten.

Der Außendurchmesser D der Außenhülse 10 ist zwischen 60 mm bis 200 mm groß, der Radius R für die Krümmung der sphärischen Oberfläche 9 des Teilabschnitts 8: R = 1,0 x D bis 2,5 x D für die kardanische Bewegung und die Breite B der Außenhülse 10 entlang der zentralen Längsachse 2 ist circa B = 0,5 x D bis 1,0 x D, wobei für die Bestimmung der Abmessungen D, R und B gelten soll: Je größer die Krümmung der sphärischen Oberfläche 9 des Teilabschnitts 8 ist, desto größer ist der Anteil der kardanischen Beweglichkeit aus der Geometrie des Teilabschnitts 8 für das elastische Metalllager 1. Je größer die Krümmung der sphärischen Oberfläche 9 des Teilabschnitts 10 ist, desto kleiner sollte hingegen die Breite B der Außenhülse 10 und damit auch die Breite des Teilabschnitts 8 sein, um den Außendurchmesser D der Außenhülse 10 nicht zu groß werden zu lassen. 1,0 x D, etc. steht für 1,0 mal D, etc..

Der Teilabschnitt 8 hat circa die Breite B der Außenhülse 10. Die abgeflachten Enden 6, 7 des Kerns 3 haben ungefähr halb so große Abmessung wie Teilabschnitt 8. Der Durchmesser von Teilabschnitt 8 ist ungefähr 2/3 vom Außendurchmesser D der Außenhülse 10.

Für das in den Figuren gezeigte elastische Metalllager 1 ist der Außendurchmesser D = 90 mm, der Radius R für die Krümmung der sphärischen Oberfläche 9 des Teilabschnitts 8 ist R = 200 mm, d. h. R = 2,22... x D. Die Breite B der in den Figuren gezeigten Außenhülse 10 entlang der zentralen Längsachse 2 ist B = 70 mm, d. h. B = 0,77... x D. Die Breite des gezeigten elastischen Metalllagers 1 entlang der zentralen Längsachse 2 ist circa 170 mm. Mit diesen beispielhaften Abmessungen ergeben sich für das gezeigte elastische Metalllager 1 kardanische Bewegungen von ca. 4 - 5° quer zur Längsachse 2. Bei maximaler Krümmung der sphärischen Oberfläche 9 des Teilabschnitts 8 erlaubt das elastische Metalllager 1 kardanische Bewegung bis zu 15°.

Die Oberfläche 9 des Teilabschnitts 8 ist keramik- oder emailbeschichtet mit einer Schichtdicke 15 zwischen 60 µm und 120 µm für elektrische Isolation mit einem Mindestisolierwert 500 Ohm.

## Patentansprüche

1. Elastisches Lager (1) zur Kraftübertragung mit:
- einem Kern (3) zur Verbindung mit einem ersten Bauteil, wobei der Kern (3) einen rotationssymmetrischen Teilabschnitt (8) entlang einer zentralen Längsachse (2) des Lagers (1) aufweist,
- einer im Wesentlichen zylindrischen Außenhülse (10) zur Verbindung mit einem zweiten Bauteil, wobei die Außenhülse (10) mit einem Außendurchmesser D zwischen 60 mm bis 200 mm rotationssymmetrisch um den Teilabschnitt (8) angeordnet ist,
- einer entlang der zentralen Längsachse (2) konstant gekrümmten Oberfläche (9) des Teilabschnitts (8) mit einem Krümmungsradius R = 1,0 x D bis 2,5 x D,
- mindestens zwei Federelementen (11) aus Ganzmetallkissen zwischen dem Teilabschnitt (8) des Kerns (3) und der Außenhülse (10), die um den Teilabschnitt (8) am Kern (3) anliegen, und
- Sicherungsringen (13), die zur axialen Fixierung der Außenhülse (10) und der Elemente (11, 12) zwischen Teilabschnitt (8) und Außenhülse (10) zu jeder Seite des Teilabschnitts (8) radial umlaufend in der Außenhülse (10) gehalten sind.

2. Elastisches Lager (1) nach Anspruch 1, **dadurch gekennzeichnet, dass** der Teilabschnitt (8) zur Außenhülse (10) gekrümmt ist.

3. Elastisches Lager (1) nach einem der Ansprüche 1 bis 2, **dadurch gekennzeichnet, dass** mindestens zwei Keile (12) rotationssymmetrisch vorgesehen sind zwischen den Federelementen (11) und der Außenhülse (10).

4. Elastisches Lager (1) nach Anspruch 3, **dadurch gekennzeichnet, dass** die breitere Seite von jedem Keil (12) an einem der Sicherungsringe (13) anliegt.

5. Elastisches Lager nach Anspruch 1, **dadurch gekennzeichnet, dass** die Federelementen (11) jeweils aus Drahtgestricken gebildet sind.

6. Elastisches Lager (1) nach Anspruch 1, **dadurch gekennzeichnet, dass** die Federelemente (11) aus Edelstahl bestehen.

7. Elastisches Lager (1) nach Anspruch 1, **dadurch gekennzeichnet, dass** bis zu 12 Federelemente (11) rotationssymmetrisch angeordnet zwischen Teilabschnitt (8) des Kerns (3) und Außenhülse (10) vorgesehen sind.

8. Elastisches Lager (1) nach Anspruch 1, **dadurch gekennzeichnet, dass** die Federelemente (11) vorgespannt montiert sind.

9. Elastisches Lager (1) nach Anspruch 1, **dadurch gekennzeichnet, dass** die Oberfläche (9) des Teilabschnitts (8) und/oder eine Innenfläche der Außenhülse (10) keramik- und/oder mit Email beschichtet sind.

10. Elastisches Lager (1) nach Anspruch 1, **dadurch gekennzeichnet, dass** die Breite B der Außenhülse (10) circa B = 0,5 x D bis 1,0 x D ist.

## Claims

1. Elastic bearing (1) for power transmission with:
- a core (3) for connection to a first component, the core (3) having a rotationally symmetrical partial section (8) along a central longitudinal axis (2) of the bearing (1),
- a substantially cylindrical outer sleeve (10) for connection to a second component, wherein the outer sleeve (10) with an outer diameter D between 60 mm and 200 mm is arranged rotationally symmetrically around the partial section (8),
- a surface (9) of the partial section (8) which is constantly curved along the central longitudinal axis (2) and has a radius of curvature R=1.0 x D to 2.5 x D,
- at least two spring elements (11) made of all-metal cushions between the section (8) of the core (3) and the outer sleeve (10), which bear against the partial section (8) on the core (3), and
- circlips (13), which are held radially circumferentially in the outer sleeve (10) on each side of the partial section (8) for the axial fixation of the outer sleeve (10) and the elements (11, 12) between the partial section (8) and the outer sleeve (10).

2. Elastic bearing (1) according to claim 1, **characterized in that** the partial section (8) is curved towards the outer sleeve (10).

3. Elastic bearing (1) according to one of claims 1 to 2, **characterized in that** at least two wedges (12) are provided in a rotationally symmetrical manner between the spring elements (11) and the outer sleeve (10).

4. Elastic bearing (1) according to claim 3, **characterized in that** the wider side of each wedge (12) bears against one of the circlips (13).

5. Elastic bearing according to claim 1, **characterized in that** the spring elements (11) are each formed from wire meshes.

6. Elastic bearing (1) according to claim 1, **characterized in that** the spring elements (11) are made of high-grade steel.

7. Elastic bearing (1) according to claim 1, **characterized in that** up to 12 spring elements (11) are arranged rotationally symmetrically between the partial section (8) of the core (3) and the outer sleeve (10).

8. Elastic bearing (1) according to claim 1, **characterized in that** the spring elements (11) are mounted prestressed.

9. Elastic bearing (1) according to claim 1, **characterized in that** the surface (9) of the partial section (8) and/or an inner surface of the outer sleeve (10) are coated with ceramic and/or enamel.

10. Elastic bearing (1) according to claim 1, **characterized in that** the width B of the outer sleeve (10) is approximately B = 0.5 x D to 1.0 x D.

## Revendications

1. Palier élastique (1) pour transmission de puissance avec:
- un noyau (3) pour le raccordement à un premier composant, le noyau (3) ayant une section partielle symétrique en rotation (8) le long d'un axe longitudinal central (2) du palier (1),
- un manchon externe sensiblement cylindrique (10) pour le raccordement à un deuxième composant, dans lequel le manchon externe (10) avec un diamètre externe D entre 60 mm et 200 mm est agencé à symétrie de rotation autour de la section partielle (8),
- une surface (9) de la section partielle (8) qui est constamment incurvée le long de l'axe longitudinal central (2) et a un rayon de courbure R = 1,0 x D à 2,5 x D,
- au moins deux éléments ressorts (11) constitués de coussins tout métalliques entre le section partielle (8) de l'âme (3) et la douille extérieure (10), qui s'appuient contre la section partielle (8) sur l'âme (3), et
- des circlips (13), qui sont maintenus radialement circonférentiellement dans le manchon extérieur (10) de chaque côté de la section partielle (8) pour la fixation axiale du manchon extérieur (10) et des éléments (11, 12) entre la section partielle (8) et le manchon extérieur (10).

2. Palier élastique (1) selon la revendication 1, **caractérisé en ce que** la section partielle (8) est incurvée vers le manchon extérieur (10).

3. Palier élastique (1) selon l'une des revendications 1 à 2, **caractérisé en ce qu'**au moins deux cales (12) sont prévues à symétrie de révolution entre les éléments élastiques (11) et la douille extérieure (10).

4. Palier élastique (1) selon la revendication 3, **caractérisé en ce que** le côté le plus large de chaque coin (12) est en appui contre l'un des circlips (13).

5. Palier élastique selon la revendication 1, **caractérisé en ce que** les éléments élastiques (11) sont formés chacun de treillis métalliques.

6. Palier élastique (1) selon la revendication 1, **caractérisé en ce que** les éléments élastiques (11) sont en acier inoxydable.

7. Palier élastique (1) selon la revendication 1, **caractérisé en ce que** jusqu'à 12 éléments élastiques (11) sont disposés à symétrie de rotation entre la section partielle (8) du noyau (3) et le manchon extérieur (10).

8. Palier élastique (1) selon la revendication 1, **caractérisé en ce que** les éléments élastiques (11) sont montés précontraints.

9. Palier élastique (1) selon la revendication 1, **caractérisé en ce que** la surface (9) de la section partielle (8) et/ou une surface intérieure du manchon extérieur (10) sont revêtues de céramique et/ou d'émail.

10. Palier élastique (1) selon la revendication 1, **caractérisé en ce que** la largeur B du manchon extérieur (10) est d'environ B = 0,5 x D à 1,0 x D.
